# EUROPEAN PATENT SPECIFICATION

(11) **EP 4 480 710 B1**
(45) Date of publication and mention of the grant of the patent: **04.02.2026**
(21) Application number: 24173917.6
(22) Date of filing: 02.05.2024
(51) Int. Cl.: B41J 3/407, B65H 99/00, G06K 15/02

(54) **CAMERA CALIBRATION FOR ROBOTIC ARRAYED INKJET PRINTING**
KAMERAKALIBRIERUNG FÜR ROBOTISCHES ARRAY-TINTENSTRAHLDRUCKEN
ÉTALONNAGE DE CAMÉRA POUR IMPRESSION À JET D'ENCRE EN RÉSEAU ROBOTIQUE

(30) Priority: 21.06.2023 US 202318338553
(43) Date of publication of application: 25.12.2024
(73) Proprietor: The Boeing Company, Arlington, VA 22202 (US)
(72) Inventor: HARDY, WILLAREDT, Arlington, 22202 (US); BAKER, ANTHONY W., Arlington, 22202 (US); FREEMAN, PHILIP LAWRENCE, Arlington, 22202 (US)
(74) Representative: Sandri, Sandro

(56) References cited:
- US-A1- 2016 035 079
- US-A1- 2017 151 671
- US-A1- 2020 269 602
- US-A1- 2022 097 434

## Description

### TECHNOLOGICAL FIELD

The present disclosure relates generally to the field of inkjet printing and, more specifically, to camera calibration for use in detecting errors with inkjet printing.

### BACKGROUND

Inkjet printing equipment can be configured for printing on large surfaces. Printing contexts include but are not limited printing on various aircraft components, such as a commercial aircraft fuselage, wings, and flight control members. Other contexts include but are not limited to large equipment components (e.g., frames, work beds) and industrial machinery.

The inkjet printing equipment includes an inkjet printhead assembly mounted on a robot. In one example, the printhead assembly includes a printhead housing that has a number of separate printheads. Each inkjet printhead dispenses a different color ink, such as cyan, yellow, magenta and black. The printheads are controlled as the robot moves the printhead assembly across the surface during the printing.

An issue with large scale inkjet printing is the need for large robots that are sized to extend across a portion or entirety of the printed surfaces. The printhead assembly is mounted at the end of the robot and experiences high dynamic loads as a result of the size. Inkjet printing allows very low error tolerance in ink application before visible defects occur. Cameras are used to monitor the inkjet printing and detect the visible errors. The cameras should be calibrated to provide for the localized, low latency visual monitoring to minimize visible printing defects. The cameras should be configured to identify various errors in the inkjet printing such as but not limited to nozzle outages and motion system errors between overlapping passes of ink application.

Document US 2022/097434 A1, with its abstract, describes a three-dimensional object printing apparatus including a liquid discharge head that discharges a liquid to a three-dimensional workpiece, a moving mechanism that changes a position of the liquid discharge head relative to the workpiece, and a detection section that detects the position of the liquid discharge head relative to the workpiece, in which the apparatus executes a first detection operation in which the detection section detects a position on the first scanning path while the moving mechanism causes the liquid discharge head to scan relative to the workpiece along a first scanning path, and a first printing operation in which the liquid discharge head discharges the liquid to a first region of the workpiece while the moving mechanism causes the liquid discharge head to scan relative to the workpiece along a second scanning path based on a detection result by the detection section in the first detection operation.

Document US 2020/269602 A1, with its abstract, describes a system and method for printing an image on a surface using a printing robot, wherein data from an internal position determination system of the robot as well as data from a reference system comprising a stationary reference external to the robot are used to calculate an estimate of position, velocity and acceleration of the print head relative to the surface. As print head is moved along the surface during printing, i.e. as the print head is moved while ink is ejected from nozzles of the print head, the positioning of the print head and activation of nozzles of the print head are controlled based on the estimate.

Document US 2016/035079 A1, with its abstract, describes systems and methods that determine a mapping between a first camera system's coordinate system and a second camera system's coordinate system; or determine a transformation between a robot's coordinate system and a camera system's coordinate system, and/or locate, in a robot's coordinate system, a tool extending from an arm of the robot based on the tool location in the camera's coordinate system. The disclosed systems and methods may use transformations derived from coordinates of features found in one or more images. The transformations may be used to interrelate various coordinate systems, facilitating calibration of camera systems, including in robotic systems, such as an image-guided robotic systems for hair harvesting and/or implantation.

Document US 2017/151671 A1, with its abstract, describes a control device capable of controlling each of a robot having a robot arm, and an imaging portion which is capable of capturing a first reference marker, a second reference marker, and a third reference marker. Any one of the imaging portion, the first reference marker, the second reference marker, and the third reference marker is provided in the robot, and a posture of a reference surface parallel to a plane which passes through the first reference marker, the second reference marker, and the third reference marker, is acquired based on a first image in which the first reference marker is captured by the imaging portion, a second image in which the second reference marker is captured by the imaging portion, and a third image which captures the third reference marker by the imaging portion.

### SUMMARY

The present disclosure provides a method of calibrating a camera for use with robotic inkjet printing having the steps described at claim 1. The dependent claims outline advantageous ways of carrying out the method.

Furthermore, the present disclosure provides an inkjet printing system to print on an object, comprising the features described at claim 12. The dependent claims outline advantageous forms of embodiment of the system.

The features, functions and advantages that have been discussed can be achieved independently in various aspects or may be combined in yet other aspects, further details of which can be seen with reference to the following description and the drawings.

### BRIEF DESCRIPTION OF THE DRAWINGS

Figure 1 is a perspective view of an object and a metrology system and control unit configured to measure the object and calibrate a camera.
Figure 2 is schematic diagram of a printhead assembly coupled to a robot for inkjet printing of an object.
Figure 3 is a perspective view of a printhead assembly.
Figure 4A is a schematic diagram of a calibration artifact.
Figure 4B is a schematic diagram of a calibration artifact.
Figure 5 is a flowchart diagram of a method of calibrating a camera with respect to a robot.
Figure 6 is a flowchart diagram of a method of calibrating a camera with respect to a robot.
Figure 7 is a flowchart diagram of a method of calibrating a camera with respect to a robot.
Figure 8 is a schematic diagram of a control unit that controls operation of the calibration of a camera.

### DETAILED DESCRIPTION

The present disclosure provides a system for inkjet printing, particularly for printing on large objects, such as commercial aircraft surfaces. The disclosure provides for calibrating one or more cameras that are coupled to the printhead assembly with relation to the motion of a co-mounted robotic inkjet system through the use of one or more calibration artifacts printed by the inkjet system.

The disclosure provides a methodology for the measurement of camera intrinsics, extrinsics, and ink color recognition as it relates to an inkjet printhead mounted on a robot through application and identification of one or more calibration artifacts at locations known in the coordinate frame of the overall robotic motion. In some examples, calibration artifacts are printed on an object and include one or more control points at precisely known locations within the coordinate system of motion for the targeted robotic inkjet system. This placement significantly reduces the degree of error in the determination of the relation between the extrinsic coordinate systems of a camera and a robotic inkjet end-effector. This calibration supports accurate, low latency inkjet printing defect detection and rectification processes by localizing cameras relative to the robotic inkjet system, providing means to localize defects identified in line scan imagery and support targeted rectification procedures.

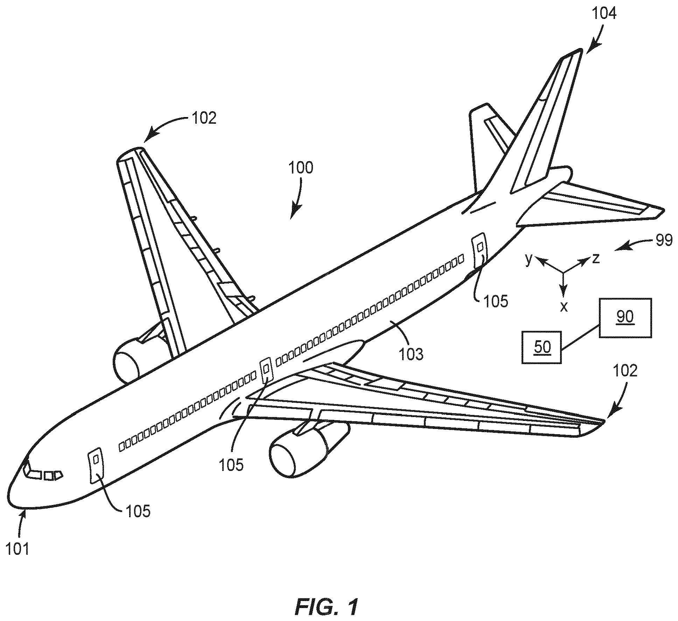

The inkjet printing system and method can be used for printing on a variety of different objects 100. Figure 1 illustrates one example of an object 100 that includes a commercial aircraft. In some examples, the printing occurs after the object has been assembled such as the assembled aircraft of Figure 1. In other examples, the printing occurs on objects 100 consisting of smaller components that may (or may not) be subsequently assembled into a larger assemblies. Using an aircraft assembly, examples of smaller objects 100 that are printed then subsequently assembled include but are not limited to vertical and horizontal stabilizers, engine housings, and portions of a fuselage.

A metrology system 50 measures the dimensions of the object 100. The metrology system 50 includes one or more instruments to take measurements of the object 100. In some examples, a metrology system 50 includes one or more laser trackers that accurately measures the object 100 by determining the positions of one or more optical points and/or artifacts on the object 100. In some examples, the metrology system 50 includes a coordinate measuring machine (CMM) that measures the geometry of the object 100 by sensing discrete points on the surface with a probe. In metrology systems 50 with two or more instruments, the instruments may be the same or different. In some examples, the metrology system 50 includes a control unit with computer processing capabilities to determine the dimensions. Additionally or alternatively, the metrology system 50 is operatively connected to a control unit 90 that oversees the calibration process.

The measurements of the metrology system 50 are used to establish a coordinate system 99 to identify locations on the object 100. This coordinate system 99 is used by the control unit 90 during calibration of the camera 30, inkjet printing of the object 100, and/or movement of the robot 40.

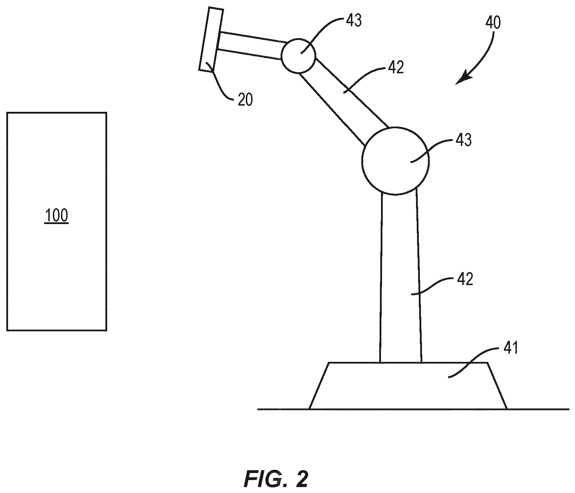

Figure 2 illustrates a robot 40 configured to move the inkjet printhead assembly 20 during printing of the object 100. The robot 40 includes a base 41 that supports one or more linkages 42. The base 41 can be configured to be positioned at a fixed location or can include wheels or otherwise be movable relative to the object 100. Articulating joints 43 provide for relative movement between the linkages 42 and/or the inkjet printhead assembly 20. The size, shape, and movement capabilities of the robot 40 can vary depending upon the needs of the print job.

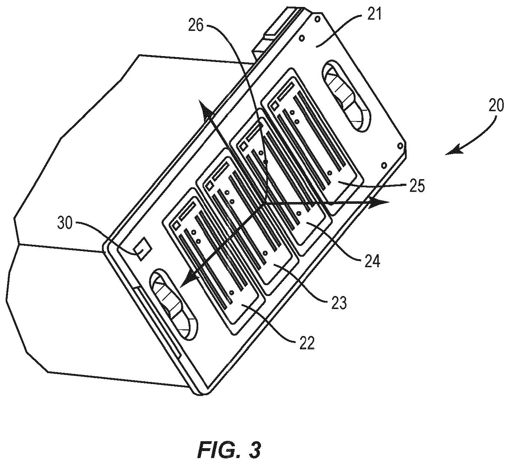

The printhead assembly 20 is mounted at the end of the robot 40. Figure 3 illustrates the printhead assembly 20 in greater detail. The printhead assembly 20 includes a housing 21. Inkjet printheads 22, 23, 24, 25 are mounted in the housing 21 and each is configured to discharge a different color ink to produce a full color palette that may be used in the printing. In some examples, the printheads include a cyan printhead 22, a yellow printhead 23, a magenta printhead 24 and a black printhead 25. This is a typical printhead arrangement where the printhead assembly 20 will pass over the object 100 in a normal print direction with the cyan printhead 22 at a leading end followed by the yellow printhead 23, the magenta printhead 24 and the black printhead 25 at a trailing end to discharge ink in color sequences to produce the colors of the pattern in a manner known in the art. Alternative color sequences and/or alternative base colors may be used depending on a particular implementation of the printhead assembly 20 in accordance with the present disclosure. The printhead assembly 20 includes a tool center point (TCP) 26. The TCP 26 serves as an origin that is used to determine the position of the printhead assembly 20 in the coordinate system 99.

During printing, the robot 40 moves the printhead assembly 20 in various manners including along one or more axes. One type of movement is along a first axis (e.g., an X-axis) that corresponds to the side-to-side movement of the housing 21 in the print direction. The positive X direction is in the direction of the printheads 22, 23, 24, 25 moving in a single file line with the cyan printhead 22 passing over the object first. A second axis (e.g., a Y-axis) is in the up-and-down direction of movement of the printhead assembly 20. A third axis (e.g., a Z-axis) represents movement of the printhead assembly 20 toward and away from the object 100 normal to the surface of the object 100 that is being printed. The robot 40 is further able to rotate the printhead assembly 20 in various manners and with various rotational degrees of freedom including roll, pitch, and yaw.

One or more cameras 30 are mounted to the printhead assembly 20 to capture images from the object 100. Various types of cameras 30 can be used to capture the image data. In some examples, the camera 30 includes a single sensor element that is configured to produce two-dimensional images. One example is a line scan camera 30 that captures one row of pixels at a time as the printhead assembly 20 is passed over the object 100. The line scan camera 30 is positioned on the printhead assembly 20 at a known location relative to the TCP 26. This position is used during calibration of the camera 30 as will be explained in more detail below. Figure 3 includes an example with a single camera 30 coupled to the printhead assembly 20. In other examples, two or more cameras 30 are coupled to the printhead assembly 20. In these examples, the cameras 29 may be the same or different.

The control unit 90 controls the robot 40 to move the printhead assembly 20 along the various directions and rotations to print on the object 100. In some examples, the control unit 90 uses a position on the printhead assembly 20 to monitor the movement. In one example, the control unit 90 uses the TCP 26. The TCP 26 provides for a base reference point when determining the position. In other examples, the control unit 90 tracks a different point when monitoring the location of the printhead assembly 20. In the various examples, the position that is used to monitor the movement of the printhead assembly 20 is located at a known position from the camera 30. The known position is a known distance from the camera 30.

During the inkjet printing process, the control unit 90 monitors the object 100 for visible printing defects. To provide for accurate monitoring, the camera 30 is calibrated with respect to the motion of the robot 40. The calibration process uses one or more calibration artifacts 60 that are printed on the object 100 by the printhead assembly 20. The calibration artifacts 60 are located at known positions within the coordinate system 99. After printing, the robot 40 moves the camera 30 over the object to detect the one or more artifacts 60. The one or more detected positions based on the captured image data is compared to the one or more known locations to calibrate the camera 30.

The calibration artifacts 60 are configured to be printed on the object 100 by the printhead assembly 20. The number of calibration artifacts 60 used during the calibration can vary from a single calibration artifact 60 to multiple calibration artifacts 60. When multiple calibration artifacts 60 are used, the calibration artifacts 60 may be the same or different.

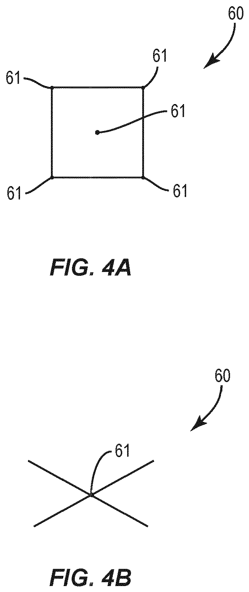

The calibration artifacts 60 include one or more control points 61. The control points 61 are specific, identifiable points on the calibration artifacts 60 that can be detected during analysis of the image data captured by the camera 30. The calibration artifacts 60 with the control points 61 can vary depending upon the testing and range from robust pixel offsets to minor pixel offsets. Figure 4A illustrates an example of a calibration artifact 60 that includes a rectangular box. Control points 61 are located at one or more of the corners and a center point. Figure 4B illustrates another calibration artifact 60 that includes a pair of straight lines. A control point 61 is located at an intersection of the lines. The calibration artifacts 60 can be printed in various colors within color gamuts of the printheads 22, 23, 24, 25. The calibration artifacts 60 provide for calibrating one or more of alignment and color recognition.

The methods can be implemented using any number of different forms of calibration artifacts 60. In some examples, the calibration incorporates elements of ink color gamut to perceived ink color calibration.

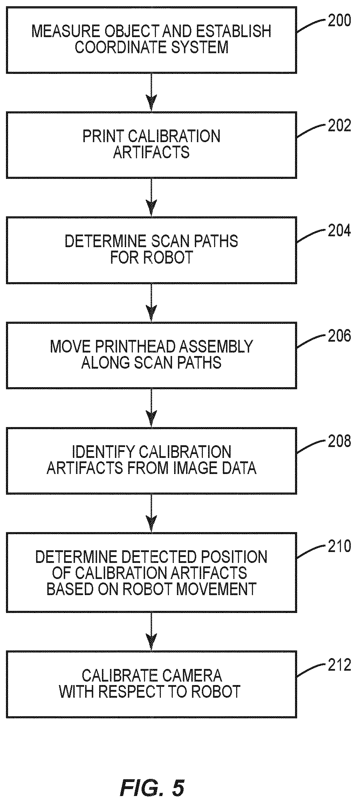

Figure 5 illustrates a method of calibrating a camera 30 relative to the robot 40 used to move the printhead assembly 20. The metrology system 50 measures the object 100 and establishes a coordinate system 99 (block 200). In some examples, this includes collecting 3D scans of the surface of the object 100 using a metrology system 50 having one or more metrology instruments.

One or more calibration artifacts 60 are printed on the object 100 with the printhead assembly 20 (block 202). In some examples, this includes moving the printhead assembly 20 over the object 100 using the robot 40. The printhead assembly 20 prints the one or more calibration artifacts 60 at known positions on the object 100. In some examples, the locations are determined by the metrology system 50 after the calibration artifacts 60 are printed on the object 100. The one or more metrology instruments scan the object 100 and detect the position on the object 100. In some examples, the calibration artifacts 60 are printed at specific, detectable points on the object 100. Examples include but are not limited to intersections of the wings and fuselage of an aircraft and at a tip of the wing.

After the calibration artifacts 60 are printed on the object 100, scan paths are developed that will move the printhead assembly 20 along the object 100 and over the calibration artifacts 60 (block 204). The scan paths provide for the robot 40 to move the camera 30 over the calibration artifacts 60 so they can be captured by the camera 30. The number and configuration of the scan paths can vary provided that the camera 30 is able to capture the calibration artifacts 60 during the movement.

After the calibration artifacts 60 are printed and the scan paths are established, the robot 40 moves the printhead assembly 20 along the scan paths (block 206). The robot 40 moves the printhead assembly 20 over the object 100 at varying attitudes and depths with minimal angular deflection along each trajectory. During the movement, the control unit 90 monitors the movement of the robot 40 and the location of the printhead assembly 20. The location information is referenced in the coordinate system 99 established by the metrology system 50. In some examples, the location of the printhead assembly 20 is based on the TCP 26. In addition to the location, the control unit 90 monitors the timing of the movement of the robot 40 and printhead assembly 20. Thus, the control unit 90 monitors the location and time at which the printhead assembly 20 moves over various points on the object 100 including over the calibration artifacts 60.

The camera 30 captures image data including of the calibration artifacts 60 as the printhead assembly 20 moves over the object 100. In some examples, the camera 30 continuously captures image data of the object 100. In some examples, the camera 30 periodically captures image data, such as recording image data at various frequencies as the camera 30 is moved across the object 100. The corresponding time at which the image data is captured is also associated with the image data.

The control unit 90 receives the image data and identifies the calibration artifacts 60 (block 208). In some examples, the identification includes determining the one or more control points 61 of the calibration artifacts 60.

The control unit 90 determines a detected position of the calibration artifacts 60 based on the movement of the robot 40 (block 210). The detected position is determined by corresponding the location of the printhead assembly 20 at the time of the calibration artifact 60 is captured in the image data by the camera 30. For example, if a calibration artifact 60 is captured in an image frame that was taken at time X, the control unit 90 determines the position of the printhead assembly 20 at time X. The position of the calibration artifact 60 is then equated to the position of the printhead assembly 20 at that time. In some examples, this includes the time at which the control point 61 is captured in the image data. In some examples, the position of the printhead assembly 20 is equated to the position of the TCP 26.

In some examples, the detected position further includes accounting for the offset distance on the printhead assembly 20 between the TCP 26 and the camera 30. In some examples, this is necessary when the control unit 90 equates the position of the camera 30 to the TCP 26. In one example, the control unit 90 selects one or more frames from the image data. For each of the frames, the control unit 90 initially determines the position of the camera 30 as being equal to the TCP 26. The control unit 90 then accounts for the offset distance between the TCP 26 and the camera 30 to determine the detected position of the calibration artifact 60.

The camera 30 is then calibrated based on the known position of the calibration artifacts 60 and the detected positions of the calibration artifacts 60 (block 212). The difference between the two positions provides for the control unit 90 to calibrate the camera 30 with respect to the robot 40.

In some examples, the calibration of the camera 30 uses traditional optimization methods to determine the camera parameters. The calibration parameters can include one or more intrinsic parameters and/or extrinsic parameters. In some examples, the control unit 90 can determine an overall alignment of the printhead assembly 20, alignment of each individual printhead 22, 23, 24, 25, operation of each individual printhead 22, 23, 24, 25 (e.g., is the printhead working properly), and various color gamut aspects.

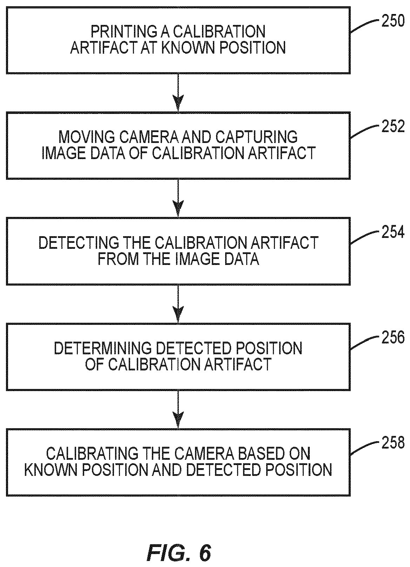

Figure 6 illustrates another method of calibrating a camera 30 for use with robotic inkjet printing. The method includes printing a calibration artifact 60 that has one or more control points 61 (block 250). The calibration artifact 60 is printed with a printhead assembly 20 that is coupled to a robot 40. The calibration artifact 60 is printed on an object 100 at a known position. A camera 30 that is coupled to the printhead assembly 20 is moved with the robot 40 (block 252). The camera 30 captures image data of the calibration artifact 60.

The image data is analyzed and the calibration artifact 60 is detected (block 254). A detected position of the calibration artifact 60 is determined based on a location of the robot 40 when the image data is captured (block 256). The camera 30 is calibrated based on the known position of the calibration artifact 60 and the detected position of the calibration artifact 60 (block 258).

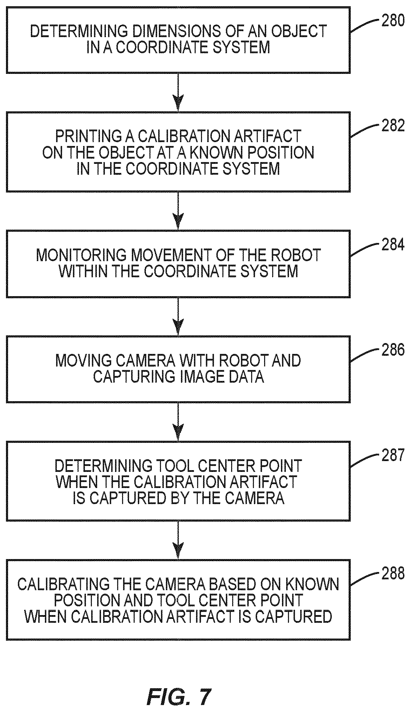

Figure 7 illustrates a method of calibrating a camera 30 for use with robotic inkjet printing. The method includes determining dimensions of an object 100 within a coordinate system 99 that is based on three dimensional scans of the object 100 by a metrology system 50 (block 280). A calibration artifact 60 is printed on the object 100 with a printhead assembly 20 that is coupled to a robot 40 (block 282). The calibration artifact 60 is printed at a known position on the object 100 within the coordinate system 99.

The location of the robot 40 is monitored within the coordinate system 99 as the robot 40 moves over the object 100 (block 284). A camera 30 that is coupled to the robot 40 is moved over the object 100 and captures image data including the calibration artifact 60 (block 286). A location of a tool center point 26 is determined for when the image data of the calibration artifact 60 was captured (block 287). The location is based on a location of the robot 40 when the image data was captured by the camera 30. The camera 30 is calibrated with respect to the robot 40 based on a difference between the known position of the calibration artifact 60 and the tool center point 26 when the image data of the calibration artifact 60 was captured (block 288).

In some examples, the printhead assembly 20 includes a single camera 30 that captures the image data. In other examples, the printhead assembly 20 includes two or more cameras 30 that each capture image data. The locations of the cameras 30 are tracked and the image data captured by the cameras 30 are analyzed as described above. The detected position of the calibration artifact 60 is determined based on the image data from one or more of the different cameras 30.

In some examples, the calibration process is performed by a control unit 90. In some examples, the control unit 90 is coupled to the printhead assembly 20 and/or robot 40. In other examples, the control unit 90 is located remotely away from the robot 40 and printhead assembly 20.

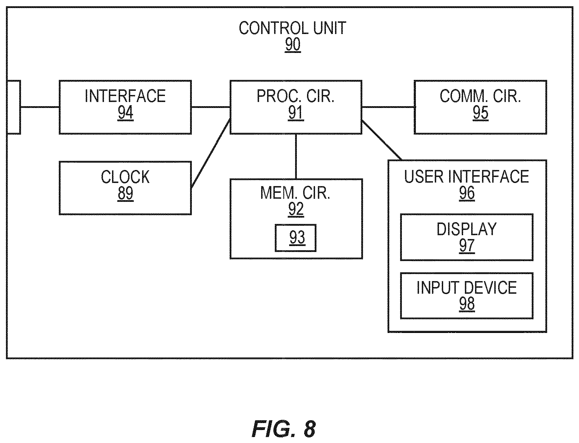

As illustrated in Figure 8, the control unit 90 includes processing circuitry 91 that operates according to program instructions 93 stored in memory circuitry 92. The processing circuitry 91 includes one or more circuits, microcontrollers, microprocessors, hardware, or a combination thereof. The processing circuitry 91 can include various amounts of computing power to provide for the needed functionality.

Memory circuitry 92 includes a non-transitory computer readable storage medium storing program instructions 93, such as a computer program product, that configures the processing circuitry 91 to implement one or more of the techniques discussed herein. Memory circuitry 92 can include various memory devices such as, for example, read-only memory, and flash memory. Memory circuitry 92 can be a separate component as illustrated in Figure 8 or can be incorporated with the processing circuitry 91. Alternatively, the processing circuitry 91 can omit the memory circuitry 92, e.g., according to at least some embodiments in which the processing circuitry 91 is dedicated and non-programmable.

Interface circuitry 94 provides for sending and/or receiving signals from one or more of the components of the system. Components include but are not limited to the robot 40, printhead assembly 20, and camera 30. The interface circuitry 94 can provide for one-way communications or two-way communications that are both to and from the components.

Communication circuitry 95 provides for communications to and from the control unit 90 with a remote node (e.g., operator equipment, server, database). Communications circuitry 95 provides for sending and receiving data with one or more remote nodes. A clock 89 is used to tracking the timing of movement of the robot 40 and/or printhead assembly 20.

A user interface 96 provides for a user to control one or more aspects of the system during operation. The user interface 96 includes one or more input devices 98 such as but not limited to a keypad, touchpad, roller ball, and joystick. The user interface 96 also includes one or more displays 97 for displaying information regarding the testing and/or for an operator to enter commands to the processing circuitry 91.

In some examples, the control unit 90 controls the full operation of the calibration system. Additionally or alternatively, one or more of the components can be controlled by a user.

The present disclosure accounts for issues with inkjet printing, particularly large scale inkjet printing that uses large robots 40 that are sized to extend across a portion or entirety of an object 100. The present disclosure addresses issues with inkjet printing including the very low error tolerance in ink application before visible defects occur. The one or more cameras 30 monitor the inkjet printing and detect the visible errors. The calibration of the cameras 30 provides for the localized, low latency visual monitoring to minimize visible printing defects. The cameras 30 are configured to identify various errors in the inkjet printing such as but not limited to nozzle outages and motion system errors between overlapping passes of ink application.

In some examples, multiple different calibration artifacts 60 are stored in the memory circuitry 92. Each of the calibration artifacts 60 is applicable for detecting a different aspect of the camera calibration. The control unit 90 determines the one or more calibration artifacts 60 that are printed on the object 100 based on a desired aspect of the camera calibration. In one example, the control unit 90 receives input from a user regarding the aspect of the calibration and prints the applicable one or more calibration artifacts 60 based on the input.

The system and methods of the present disclosure may be carried out in other ways than those specifically set forth herein, as long as falling within the appended claims.

## Claims

1. A method of calibrating a camera (30) for use with robotic inkjet printing, the method comprising:
printing a calibration artifact (60) that comprises one or more control points (61), the calibration artifact (60) being printed with a printhead assembly (20) that is coupled to a robot (40) and the calibration artifact (60) is printed on an object (100) at a known position;
moving with the robot (40) a camera (30) that is coupled to the printhead assembly (20) and capturing image data of the calibration artifact (60);
detecting the calibration artifact (60) from the image data;
determining a detected position of the calibration artifact (60) based on a location of the robot (40) when the image data is captured; and
calibrating the camera (30) based on the known position of the calibration artifact (60) and the detected position of the calibration artifact (60).

2. The method of claim 1, wherein the calibration artifact (60) comprises one or more control points (61) that are located at known control point positions, the method further comprising:
determining detected positions of the control points (61) from the image data captured by the camera (30); and
calibrating the camera (30) based on the positions of the control points of the calibration artifact (60) and the detected positions of the control points (61) of the calibration artifact 60.

3. The method of any one of claims 1 or 2, further comprising creating scan paths for the robot (40) to move the printhead assembly (20) over the object (100) and capturing the image data of the calibration artifact (60) while the robot (40) is moving the printhead assembly (20) along the scan paths.

4. The method of any one of claims 1-3, further comprising capturing three-dimensional scans of a surface of the object (100) with a metrology system (50) prior to printing the calibration artifact (60) at the known position.

5. The method of claim 4, further comprising determining dimensions of the object (100) within a coordinate system (99) that is based on three dimensional scans of the object (100) by a metrology system (50).

6. The method of any one of claims 4 or 5, further comprising determining the movement of the robot (40) in a metrology coordinate system (99) that is based on the three-dimensional scans of the object (100).

7. The method of any one of claims 1-6, further comprising determining the location of the robot (40) based on a tool center point (26) of the printhead assembly (20).

8. The method of claim 7, further comprising calibrating the camera (30) based on a known distance on the printhead assembly (20) between the tool center point (26) and the camera (30).

9. The method of any one of claims 7-8, wherein the calibration artifact (60) is a first calibration artifact (60), the method further comprising:
printing additional calibration artifacts (60) on the object (100) at known positions;
capturing additional image data of the additional calibration artifacts (60); and
calibrating the camera (30) with respect to the robot (40) based on a difference between the known positions of the calibration artifacts (60) and the tool center point (26) when the image data of the calibration artifacts (60) was captured.

10. The method of any one of claims 1-9, wherein capturing the image data of the calibration artifact (60) comprises capturing the image data with a line scan camera (30).

11. The method of claim 9, wherein calibrating the camera (30) with respect to the robot (40) comprises factoring a known distance between the tool center point (26) and a position of the camera (30) on the printhead assembly (20).

12. An inkjet printing system to print on an object, the inkjet printing system comprising:
a printhead assembly (20) comprising a plurality of inkjet printheads (22, 23, 24, 25), the printhead assembly (20) configured to be mounted to a robot (40);
a control unit (90) operatively connected to the printhead assembly (20) and the robot (40) to move the printhead assembly (20) relative to the object, the control unit (90) comprising processing circuity (91) configured to implement a method according to any one of claims 1 to 11.

13. The inkjet printing system of claim 12, further comprising a metrology system (50) that determines a three dimensional shape of the object.

14. The inkjet printing system of claims 12 or 13, further comprising a memory circuitry (92), and wherein the control unit (90) is configured to determine the calibration artifact (60) based on a series of calibration artifacts that are stored in the memory circuitry (92).

15. The inkjet printing system of any one of claims 12-14, further comprising a user interface (96) comprising an input device (98) and a display (97), the user interface (96) being configured to send signals to the processing circuitry (91) to control an aspect of the calibration of the camera (30).

## Patentansprüche

1. Verfahren zum Kalibrieren einer Kamera (30) zur Verwendung bei einem robotischen Tintenstrahldrucken, wobei das Verfahren aufweist:
Drucken eines Kalibrierungsartefakts (60), das ein oder mehrere Kontrollpunkte (61) aufweist, wobei das Kalibrierungsartefakt mit einer Druckkopfanordnung (20) gedruckt wird, die an einen Roboter (40) gekoppelt ist, und wobei das Kalibrierungsartefakt (60) auf ein Objekt (100) an einer bekannten Position gedruckt wird;
Bewegen mit dem Roboter (40) einer Kamera (30), die an die Druckkopfanordnung (20) gekoppelt ist, und Speichern von Bilddaten des Kalibrierungsartefakts (60);
Erfassen des Kalibrierungsartefakts (60) aus den Bilddaten;
Bestimmen einer erfassten Position des Kalibrierungsartefakts (60) basierend auf einem Ort des Roboters (40), wenn die Bilddaten gespeichert werden; und
Kalibrieren der Kamera (30) basierend auf der bekannten Position des Kalibrierungsartefakts (60) und der erfassten Position des Kalibrierungsartefakts (60).

2. Verfahren nach Anspruch 1, wobei das Kalibrierungsartefakt (60) einen oder mehrere Kontrollpunkte (61) aufweist, die in bekannten Kontrollpunktpositionen lokalisiert sind, wobei das Verfahren ferner aufweist:
Bestimmen erfasster Positionen der Kontrollpunkte (61) aus den durch die Kamera (30) gespeicherten Bilddaten; und
Kalibrieren der Kamera (30) basierend auf den Positionen der Kontrollpunkte des Kalibrierungsartefakts (60) und der erfassten Positionen der Kontrollpunkte (61) des Kalibrierungsartefakts (60).

3. Verfahren nach einem der Ansprüche 1 oder 2, das ferner ein Erzeugen von Abtastwegen für den Roboter (40) zum Bewegen der Druckkopfanordnung (20) über das Objekt (100) und ein Speichern der Bilddaten des Kalibrierungsartefakts (60) aufweist, während der Roboter (40) die Druckkopfanordnung (20) entlang der Abtastwege bewegt.

4. Verfahren nach einem der Ansprüche 1-3, das ferner ein Speichern von dreidimensionalen Abtastungen einer Oberfläche des Objekts (100) mit einem Metrologiesystem (50) vor einem Drucken des Kalibrierungsartefakts (60) an der bekannten Position aufweist.

5. Verfahren nach Anspruch 4, das ferner ein Bestimmen von Abmessungen des Objekts (100) innerhalb eines Koordinatensystems (99) aufweist, das auf dreidimensionalen Abtastungen des Objekts (100) durch ein Metrologiesystem (50) basiert.

6. Verfahren nach einem der Ansprüche 4 oder 5, das ferner ein Bestimmen der Bewegung des Roboters (40) in einem Metrologiekoordinatensystem (99) aufweist, das auf den dreidimensionalen Abtastungen des Objekts (100) basiert.

7. Verfahren nach einem der Ansprüche 1-6, das ferner ein Bestimmen des Orts des Roboters (40) basierend auf einem Werkzeugmittelpunkt (26) der Druckkopfanordnung (20) aufweist.

8. Verfahren nach Anspruch 7, das ferner ein Kalibrieren der Kamera (30) basierend auf einer bekannten Entfernung auf der Druckkopfanordnung (20) zwischen dem Werkzeugmittelpunkt (26) und der Kamera (30) aufweist.

9. Verfahren nach einem der Ansprüche 7-8, wobei das Kalibrierungsartefakt (60) ein erstes Kalibrierungsartefakt (60) ist, wobei das Verfahren ferner aufweist:
Drucken von zusätzlichen Kalibrierungsartefakten (60) auf das Objekt (100) bei bekannten Positionen;
Speichern von zusätzlichen Bilddaten der zusätzlichen Kalibrierungsartefakte (60); und
Kalibrieren der Kamera (30) in Bezug auf den Roboter (40) basierend auf einer Differenz zwischen den bekannten Positionen der Kalibrierungsartefakte (60) und dem Werkzeugmittelpunkt (26), wenn die Bilddaten der Kalibrierungsartefakte (60) gespeichert wurden.

10. Verfahren nach einem der Ansprüche 1-9, wobei ein Speichern der Bilddaten des Kalibrierungsartefakts (60) ein Speichern der Bilddaten mit einer Linienabtastkamera (30) aufweist.

11. Verfahren nach Anspruch 9, wobei ein Kalibrieren der Kamera (30) in Bezug auf den Roboter (40) ein Faktorisieren einer bekannten Entfernung zwischen dem Werkzeugmittelpunkt (26) und einer Position der Kamera (30) auf der Druckkopfanordnung (20) aufweist.

12. Tintenstrahldrucksystem zum Drucken auf ein Objekt, wobei das Tintenstrahldrucksystem aufweist:
eine Druckkopfanordnung (20), die eine Vielzahl von Tintenstrahldruckköpfen (22, 23, 24, 25) aufweist, wobei die Druckkopfanordnung (20) eingerichtet ist, an einem Roboter (40) montiert zu werden;
eine Steuereinheit (90), die betriebsmäßig mit der Druckkopfanordnung (20) und dem Roboter (40) zum Bewegen der Druckkopfanordnung (20) relativ zu dem Objekt verbunden ist, wobei die Steuereinheit (90) eine Verarbeitungsschaltung (91) aufweist, die eingerichtet ist, ein Verfahren gemäß einem der Ansprüche 1 bis 11 zu implementieren.

13. Tintenstrahldrucksystem nach Anspruch 12, das ferner ein Metrologiesystem (50) aufweist, das eine dreidimensionale Form des Objekts bestimmt.

14. Tintenstrahldrucksystem nach Anspruch 12 oder 13, das ferner eine Speicherschaltung (92) aufweist, und wobei die Steuereinheit (90) eingerichtet ist, das Kalibrierungsartefakt (60) basierend auf einer Serie von Kalibrierungsartefakten zu bestimmen, die in der Speicherschaltung (92) gespeichert sind.

15. Tintenstrahldrucksystem nach einem der Ansprüche 12 bis 14, das ferner eine Benutzerschnittstelle (96) aufweist, die eine Eingabevorrichtung (98) und eine Anzeige (97) aufweist, wobei die Benutzerschnittstelle (96) eingerichtet ist, Signale an die Verarbeitungsschaltung (91) zum Steuern eines Aspekts der Kalibrierung der Kamera (30) zu senden.

## Revendications

1. Procédé d'étalonnage d'une caméra (30) pour une utilisation avec l'impression à jet d'encre robotisée, le procédé comprenant:
l'impression d'un artefact d'étalonnage (60) qui comprend un ou plusieurs points de contrôle (61), l'artefact d'étalonnage (60) étant imprimé avec un ensemble de têtes d'impression (20) qui est couplé à un robot (40) et l'artefact d'étalonnage (60) est imprimé sur un objet (100) à une position connue;
le déplacement avec le robot (40) d'une caméra (30) qui est couplée à l'ensemble de têtes d'impression (20) et la capture de données d'image de l'artefact d'étalonnage (60);
la détection de l'artefact d'étalonnage (60) à partir des données d'image;
la détermination d'une position détectée de l'artefact d'étalonnage (60) sur la base d'un emplacement du robot (40) lorsque les données d'image sont capturées; et
l'étalonnage de la caméra (30) sur la base de la position connue de l'artefact d'étalonnage (60) et de la position détectée de l'artefact d'étalonnage (60).

2. Procédé selon la revendication 1, dans lequel l'artefact d'étalonnage (60) comprend un ou plusieurs points de contrôle (61) qui sont situés à des positions de point de contrôle connues, le procédé comprenant en outre:
la détermination des positions détectées des points de contrôle (61) à partir des données d'image capturées par la caméra (30); et
l'étalonnage de la caméra (30) sur la base des positions des points de contrôle de l'artefact d'étalonnage (60) et des positions détectées des points de contrôle (61) de l'artefact d'étalonnage (60).

3. Procédé selon l'une quelconque des revendications 1 ou 2, comprenant en outre la création de trajectoires de balayage pour le robot (40) pour déplacer l'ensemble de têtes d'impression (20) au-dessus de l'objet (100) et la capture des données d'image de l'artefact d'étalonnage (60) tandis que le robot (40) déplace l'ensemble de têtes d'impression (20) le long des trajectoires de balayage.

4. Procédé selon l'une quelconque des revendications 1 à 3, comprenant en outre la capture de balayages tridimensionnels d'une surface de l'objet (100) avec un système de métrologie (50) avant l'impression de l'artefact d'étalonnage (60) à la position connue.

5. Procédé selon la revendication 4, comprenant en outre la détermination des dimensions de l'objet (100) dans un système de coordonnées (99) qui est basé sur des balayages tridimensionnels de l'objet (100) par un système de métrologie (50).

6. Procédé selon l'une quelconque des revendications 4 ou 5, comprenant en outre la détermination du mouvement du robot (40) dans un système de coordonnées de métrologie (99) qui est basé sur les balayages tridimensionnels de l'objet (100).

7. Procédé selon l'une quelconque des revendications 1 à 6, comprenant en outre la détermination de l'emplacement du robot (40) sur la base d'un point central d'outil (26) de l'ensemble de têtes d'impression (20).

8. Procédé selon la revendication 7, comprenant en outre l'étalonnage de la caméra (30) sur la base d'une distance connue sur l'ensemble de têtes d'impression (20) entre le point central d'outil (26) et la caméra (30).

9. Procédé selon l'une quelconque des revendications 7 et 8, dans lequel l'artefact d'étalonnage (60) est un premier artefact d'étalonnage (60), le procédé comprenant en outre:
l'impression d'artefacts d'étalonnage (60) supplémentaires sur l'objet (100) à des positions connues;
la capture de données d'image supplémentaires des artefacts d'étalonnage (60) supplémentaires; et
l'étalonnage de la caméra (30) par rapport au robot (40) sur la base d'une différence entre les positions connues des artefacts d'étalonnage (60) et le point central d'outil (26) lorsque les données d'image des artefacts d'étalonnage (60) ont été capturées.

10. Procédé selon l'une quelconque des revendications 1 à 9, dans lequel la capture des données d'image de l'artefact d'étalonnage (60) comprend la capture des données d'image avec une caméra de balayage de lignes (30).

11. Procédé selon la revendication 9, dans lequel l'étalonnage de la caméra (30) par rapport au robot (40) comprend la prise en compte d'une distance connue entre le point central d'outil (26) et une position de la caméra (30) sur l'ensemble de têtes d'impression (20).

12. Système d'impression à jet d'encre pour l'impression sur un objet, le système d'impression à jet d'encre comprenant:
un ensemble de têtes d'impression (20) comprenant une pluralité de têtes d'impression à jet d'encre (22, 23, 24, 25), l'ensemble de têtes d'impression (20) configuré pour être monté sur un robot (40);
une unité de contrôle (90) reliée fonctionnellement à l'ensemble de têtes d'impression (20) et au robot (40) pour déplacer l'ensemble de têtes d'impression (20) par rapport à l'objet, l'unité de contrôle (90) comprend un circuit de traitement (91) configuré pour mettre en œuvre un procédé selon l'une quelconque des revendications 1 à 11.

13. Système d'impression à jet d'encre selon la revendication 12, comprenant en outre un système de métrologie (50) qui détermine une forme tridimensionnelle de l'objet.

14. Système d'impression à jet d'encre selon les revendications 12 ou 13, comprenant en outre un circuit de mémoire (92), et dans lequel l'unité de contrôle (90) est configurée pour déterminer l'artefact d'étalonnage (60) sur la base d'une série d'artefacts d'étalonnage qui sont stockés dans le circuit de mémoire (92).

15. Système d'impression à jet d'encre selon l'une quelconque des revendications 12 à 14, comprenant en outre une interface utilisateur (96) comprenant un dispositif d'entrée (98) et un affichage (97), l'interface utilisateur (96) étant configurée pour envoyer des signaux au circuit de traitement (91) pour contrôler un aspect de l'étalonnage de la caméra (30).
